# EUROPÄISCHE PATENTSCHRIFT

(11) **EP 2 338 190 B1**
(45) Veröffentlichungstag und Bekanntmachung des Hinweises auf die Patenterteilung: **13.02.2013**
(21) Anmeldenummer: 09736241.2
(22) Anmeldetag: 19.10.2009
(51) Int. Cl.: H01M 2/16, H01M 10/05, H01M 10/0525

(54) **LITHIUMIONEN-AKKU**
LITHIUM ION BATTERY
ACCUMULATEUR LITHIUM-ION

(30) Priorität: 20.10.2008 DE 102008052141; 31.10.2008 DE 102008054187
(43) Veröffentlichungstag der Anmeldung: 29.06.2011
(73) Patentinhaber: Dritte Patentportfolio Beteiligungsgesellschaft mbH & Co. KG, 12529 Schönefeld (DE)
(72) Erfinder: HAUSER, Otto, 73732 Esslingen (DE); FREY, Hartmut, Esslingen 73730 (DE)
(74) Vertreter: Zech, Stefan Markus
(86) Internationale Anmeldenummer: PCT/EP2009/063682
(87) Internationale Veröffentlichungsnummer: WO 2010/046346

(56) Entgegenhaltungen:
- EP-A1- 0 848 445
- JP-A- 3 064 867
- JP-A- 6 119 923
- ULBRICHT ET AL: "Advanced functional polymer membranes" POLYMER, ELSEVIER SCIENCE PUBLISHERS B.V, GB, Bd. 47, Nr. 7, 22. März 2006 (2006-03-22), Seiten 2217-2262, XP025232012 ISSN: 0032-3861 [gefunden am 2006-03-22]

## Beschreibung

Lithiumionen-Akkus weisen im Wesentlichen drei Schichten auf. Eine der Schichten ist die Kathodenschicht, die andere Schicht ist die Anodenschicht, und dazwischen befindet sich eine Folien- oder Membranschicht um die Kathoden- und Anodenschicht voneinander zu trennen.

Die Kathodenschicht setzt sich aus einer metallischen Folie und einer darauf aufgebrachten nanokristallinen Schicht zusammen. Die nanokristalline Schicht ist aus Stoffen ausgewählt, die in der Lage sind metallisches Lithium zu speichern. Dieses Speichern geschieht entweder auf chemischem Wege oder durch abscheiden von metallischen Lithium an der Grenzfläche zu der metallischen Elektrode. Ein bekanntes Material zu Speichern von Lithiumionen ist CoO₂, das Lithiumionen intercaieren und auch wieder abgeben kann.

Die Anodenschicht besteht aus nanokristallinem Silizium oder Kohlenstoff. Auf der von der Kathodenseite abliegenden Seite ist die Anodenschicht mit einer metallisch leitenden Schicht versehen.

Die zwischen diesen beiden Schichten befindliche Membrane oder Folie soll die Kathode und die Anode elektrisch und mechanisch voneinander isolieren. Es können lediglich Lithiumionen durch die Folie oder Membran hindurch wandern, d. h. die Zwischenschicht zwischen der Kathoden- und der Anodenschicht ist Lithiumionen leitend. Die elektrische Leitung zwischen der Anoden- und der Kathodenschicht geschieht im Inneren des Lithium-Akkus durch Lithiumionen, die Elektronen fließen im an den Lithium-Akku angeschlossenen Lastkreis oder kommen beim Laden aus der Spannungsquelle.

Eine Solche Anordnung wird beispielsweise von der EP 0 848 445 A1 offenbart.

Beim Entladevorgang nehmen die LiCoO₂-Moleküle die Lithiumionen auf, wodurch ein positiv geladenes Lithiumatom und ein freies Elektron entstehen. Das Elektron fließt über den Anodenanschluss und den Verbraucher zu der Kathode, während das positiv geladene Lithiumion durch die Membrane zur Kathode wandert. Beim Laden ist die Stromflussrichtung umgekehrt, womit sich das das Lithiumion mit dem Elektron an der Anode wieder zum neutralen Lithiumatom vereinigt, das in der Anodenschicht eingelagert wird.

Als Material für die Folie oder Membran wird bislang PEO (Polyethylenoxid) verwendet. Dieses Material ist bis ca. 150 °C hinreichend fest, um die gewünschte mechanische und elektrische Trennung zwischen den beiden Elektroden zu gewährleisten. Bei höheren Temperaturen verflüssigt sich das PEO zumindest lokal soweit, dass in diesem Bereichen Kurzschlüsse zwischen den beiden Elektroden stattfinden und die Zelle unbrauchbar wird.

Die Temperaturfestigkeit der Membrane zwischen den Elektroden ist somit eine wesentliche bestimmende Eigenschaft, die festlegt, mit welchem Strom die Zelle maximal belastet oder mit welchem Strom die Zelle maximal geladen werden kann. Dabei ist der Ladevorgang der kritischere Vorgang, denn das Laden des Lithium-Akkus ist ein exothermer Vorgang, so dass die Erwärmung des Lithium-Akkus gespeist wird, aus dem exothermen elektrochemischen Prozess und der Verlustwärme am Innenwiderstand des Lithium-Akkus. Je höher die Temperaturfestigkeit der Membrane ist, umso größer können die Ladeströme werden, was wiederum einen erheblichen Einfluss auf die Ladezeit hat.

Ausgehend hiervon ist es Aufgabe der Erfindung ein Lithium-Akku zu schaffen, bei dem die Membrane eine größere Temperaturfestigkeit aufweist.

Diese Aufgabe wird erfindungsgemäß durch einen Lithium-Akku mit den Merkmalen des Anspruchs 1 gelöst.

Der neue Lithium-Akku weist eine mehrschichtige Kathode auf. Die Kathode weist eine metallisch leitende Schicht und eine darauf aufgebrachte polykristalline Schicht auf. Die Anodenschicht ist ebenfalls mehrschichtig und enthält eine polykristalline Schicht sowie eine metallisch leitende Schicht. Die Kathoden und die Anodenschicht sind voneinander durch eine Membranstruktur getrennt, die eine höhere Temperaturfestigkeit als 150 °C aufweist.

Vorzugsweise sind die beiden polykristallinen Schichten nanokristalline Schichten.

Die metallisch leitende Schicht der Kathode oder der Anode können eine Nickelschicht oder eine Edelstahlschicht sein. Diejenige metallisch leitende Schicht, die als letzte aufgebracht wird und insoweit nicht als Substrat dient, kann auf galvanischem Wege aufgetragen werden, während die andere Schicht als stabilisierendes Substrat dient.

Die Materialien für die Kathodenschicht können aus den Stoffen TiS₂, MnO₂, NiMn oder CoO₂ ausgewählt werden.

Die Materialien für die Anodenschicht können aus den Stoffen C, Si, LiAl, LiC oder LiNi aufgewählt werden.

Das aufbringen der nanokristallinen Schichten für die Kathode und die Anode ist bekannt. Es kommt hierzu jedes entsprechende Verfahren in Frage, wie beispielsweise Ionenstrahlbeschichtung (Ion-Beam-Mixing).

Die Ionen leitende Membranstruktur kann ein oder zweischichtig sein. Im Falle der zweischichtigen Membrane setzt sie sich aus einem porösen Schichtmaterial und einer lediglich Lithiumionen leitenden Schicht zusammen. Die Lithiumionen leitende Schicht ist deutlich dünner als die poröse Schicht, die als mechanischer Schutz für die dünnere Lithiumionen leitende Schicht dient.

Bei der Lithiumionen leitenden Schicht kann es sich um eine Schicht handeln, die unmittelbar nach dem Aufbringen zunächst undurchlässig ist, auch für Lithiumionen. Durch eine entsprechende physikalische Behandlung wird diese dünne und ursprünglich undurchlässige Schicht Lithiumionen leiten. Hierzu wird beispielsweise im Ionenstrahlverfahren die Schicht mit Lithiumatomen oder Lithiumionen beschossen, wobei die Geschwindigkeit der Lithiumionen so eingestellt wird, dass sie entweder die Membrane durchdringen und Kanäle hinterlassen, oder die Schicht weitgehend durchdringen, jedoch innerhalb der Schicht stecken bleiben. Die verbleibende Membranstärke zwischen dem eingeschossenen Lithiumatom und der entsprechenden Elektrode oder der schützenden Folienschicht sollte nicht größer als 20 nm sein, während die Folie selbst Schichtstärken zwischen 10 und 20 µm aufweisen kann.

Eine andere Möglichkeit die Membranschicht zu erzeugen, besteht darin das Grundmaterial für die Polymerschicht mittels Hochdruckverdüsung in Kombination mit Ultraschallvernebelung aufzusprühen. Dem Polymermaterial ist Li₃PO₄ oder Li₃P oder Siliziumnanopartikel beigemischt. Ein geeignetes Verfahren ist in der DE 10 2008 047 955 beschrieben auf die hier Bezug genommen wird.

Die gewünschte Polymerisation findet statt, wenn das Polymermaterial in ein Hochfrequenzplasma hinein gesprüht wird, dass sich auf der Oberfläche des Substrates befindet.

Erfindungsgemäß werden Polymere verwendet, die eine Glasumwandlungstemperatur haben, die über 150 °C liegt. Durch die beschriebenen Verfahren können Polymere mit einer entsprechend hohen Glasumwandlungstemperatur, die an sich nicht Lithiumionen leitend sind, dazu gebracht werden Lithiumionen-leitend werden, ohne dass ihr Glasumwandlungspunkt sich in ungünstiger Weise verändert.

Eine weitere Möglichkeit die Membrane zu erzeugen, besteht darin einen kovalente verlinkten Gel-Elektrolyten zu verwenden. Der Gelelektrolyt basiert auf sternförmig und linear geformten Polymerketten. In die Struktur des Gelelektrolyten als Gerüst kann wiederum Material eingelagert werden, das Lithiumionen leitend ist und dessen Glasumwandlungspunkt unterhalb von 150 °C liegt. Durch das Gemisch aus der temperaturfesten Gerüst mit dem niedrig schmelzenden Material, das die Ionenleitung gewährleistet, wird insgesamt eine Membran erzeugt, deren Temperaturfestigkeit über 150 °C liegt.

Schließlich kann eine Sol-Gel-Schicht durch Spin- oder Dip-Coating aufgebracht werden. Die Sol-Gel-Schicht enthält ZrO₂-Partikel, sowie H₂PO₄ oder Li₃PO₄. Bei einem Sol-Gel handelt es sich um ein Gel mit koloidaler Verteilung der Festkörper in der Flüssigkeit.

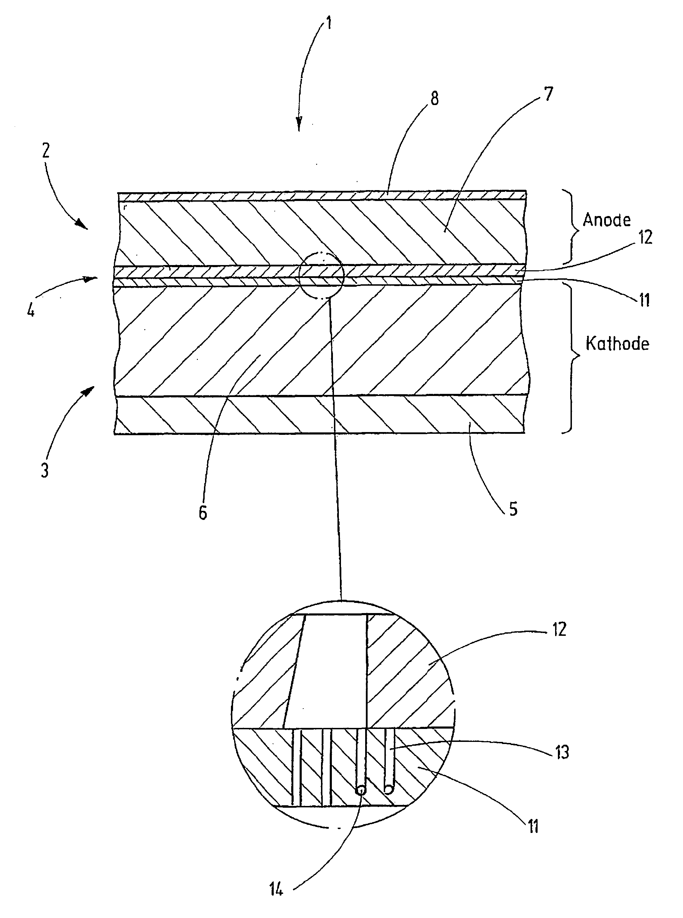

In der einzigen Figur der Zeichnung ist der prinzipielle Aufbau des Lithiumionen-Akkus dargestellt. Die Zeichnung ist nicht maßstabsgerecht und plakativ vereinfacht, um das für die Erfindung wesentliche besser verstehen zu können.

Die Figur zeigt den schematisierten Aufbau eines Lithiumionen-Akkus 1. Zu dem Lithiumionen-Akku gehört eine Anodenanordnung 2 sowie eine ebenfalls schichtförmige Kathodenanordnung 3. Zwischen der Anoden- und der Kathodenschicht 2, 3 befindet sich eine Membranstrukturschicht 4, die die Anodenschicht 2 von der Kathodenschicht 3 trennt, um einen elektrischen Kurzschluss zwischen beiden zu verhindern.

Die Kathodenschicht 3 setzt sich aus einem Substrat 5 zusammen, das beispielsweise ein Nickel- oder ein Inconelband (rostfreier Edelstahl) ist. Diese bandfömige Kathodenschicht 5 trägt eine polykristalline Schicht 6, die in der Lage ist Lithiumionen im Kristallgitter aufzunehmen, was der Fachmann als Intercalation bezeichnet. Das Material für die polykristalline Schicht 6 kann aus den Stoffen wie MnO₂, COO₂, NiMn oder anderen Stoffen mit ähnlichen Intercalationseigenschaften ausgewählt werden.

Die polykristalline Schicht 6 wird auf das Substrat 5 durch bekannte Verfahren aufgetragen, beispielsweise mittels Ionenbeam-Mixing, bei dem ein Ionenstrahl auf ein entsprechendes Target geschossen wird, das aus dem Stoff besteht, aus dem die nanokristalline Schicht erzeugt werden soll. Die auftreffenden Ionen tragen das Material ab und transportieren es auf das Substrat 5, wo es eine entsprechende nanokristalline Schicht erzeugt.

Die Membranschicht 4 setzt sich aus zwei organischen Schichten zusammen, auf die weiter unten hinsichtlich ihres Aufbaus und ihrer Erzeugung weiter eingegangen wird.

Die auf der Membranschicht 4 schließlich vorhandener Anodenschicht 2 setzt sich wiederum aus einer polykristallinen Schicht 7 und einer metallisch leitenden Schicht 8 zusammen. Die polykristalline Sschicht 7 besteht aus einem Material, das aus den Stoffen C,-Si, LiAl, LiC oder LiNi ausgewählt ist. Das Material ist so gewählt, dass hier metallisches Lithium eingelagert werden kann.

Das Aufbringen der polykristallinen Schicht 7, die den aktiven Teil der Anodenschicht 2 darstellt, kann in der gleichen Weise geschehen, wie dies zuvor in Verbindung mit der Schicht 6 erläutert ist.

Schließlich wird die Schicht 8 auf galvanischem Wege aufgetragen und zwar durch chemisches Galvanisieren. Die Schicht 8 ist beispielsweise eine metallische Nickelschicht.

Insgesamt hat der in der Figur dargestellte Aufbau eine Dicke zwischen 30 µm und 100 µm.

Die zwischen der Anode 2 und der Kathode 3 vorhandene Membranschicht 4 soll einerseits Lithiumionen leitend sein, andererseits aber hinreichend stabil, damit bei der Beschichtung und dem späteren Betrieb die Membranschicht nicht beschädigt wird. Außerdem muss die Membranschicht 4 hinreichend temperaturstabil sein, um ihre mechanischen und elektrischen Eigenschaften beizubehalten, wenn sich die Zelle im Betrieb erwärmt. Wie eingangs ausgeführt, ist dabei der Ladevorgang der kritischere Vorgang, weil der Ladevorgang ein exothermer Vorgang ist, so dass sich die Verlustwärme und die entstehende Wärme beim chemischen Prozess addieren. Beim Entladevorgang hingegen handelt es sich um einen exothermen chemischen Vorgang, womit die elektrische Verlustwärme zum Teil im exothermen Vorgang aufgebraucht wird, was dazu beiträgt, bei gleichem Strom die Temperatur der Zelle beim Entladevorgang niedriger zu halten.

Unter Lithiumionen leitend versteht der Fachmann eine Membrane, die vereinfacht gesagt, wie ein Sieb arbeitet und lediglich Lithiumionen nicht aber andere Ionen passieren lässt.

Auf die Theorie der Lithiumzelle soll hier nicht weiter eingegangen werden. Die elektrophysikalischen Vorgänge, die in der Zelle ablaufen, sind dem Fachmann bekannt und brauchen hier nicht weiter erläutert zu werden.

Die Membranschicht 2 ist zweilagig und setzt sich aus einer dünnen Lage 11 und einer dickeren Lage 12 zusammen. Die dünne Lage 11 hat eine Stärke zwischen 5 µm und 20 µm, während die dickere Lage eine Stärke zwischen 10 und 20 µm hat. Die dicke Lage 12 wird für den Herstellungsprozess der Lithiumzelle benutzt und soll bei dem weiteren Herstellungsprozess die dünnere Lage 11 vor einer Beschädigung schützen. Die dickere Lage 12 ist deswegen "porös", d. h. sie hat Durchlässe, die nicht nur Lithiumionen passieren lassen würden.

Die dicke Lage 12 kann beispielsweise aus einer Polysulfonfolie bestehen. Eine Polysulfonfolie wäre an sich nicht porös. Um sie porös zu bekommen wird sie nach dem Herstellungsprozess gereckt. Hierdurch entstehen die gewünschten durchgehenden Öffnungen. Anschließend wird die so erhaltene Folie beispielsweise durch Kalandrieren im Vakuum auf die dünne Lage 12 aufgebracht.

Die für die Funktion der Lithiumzelle 1 wichtige Schicht 11 hat eine Stärke von 2..5 µm. Das Material für die Schicht 12 kann Polysulfon, Polybenzimidazol oder Polyphosphazen sein. Dieses Material ist an sich nach dem Aufbringen auf die Schicht 6 nicht Lithiumionen leitend. Um die gewünschte Ionenleitfähigkeit zu erzeugen, wird die erzeugte Schicht mit Lithiumionen oder Lithiumatomen beschossen. Hierdurch dringen die Lithiumionen oder -atome in die Schicht 11 ein und erzeugen dort die gewünschten Kanäle 13. Es ist nicht erforderlich, dass die Kanäle 13 bis zu der Schicht 6 durchgebrochen werden es genügt, wenn die Lithiumatome wie bei 14 dargestellt, in dem sackförmigen Kanal 13 stecken bleiben. Der Abstand zwischen dem sackförmigen Ende des Kanals 13 und der Schicht 6 sollte zwischen 10 und 20 nm liegen. Ein anschließender Formierungsvorgang würde die Lithiumionen vollständig durch das Material der Schicht 11 hindurch treiben.

Die solchermaßen erzeugte Lithiumionen leitende Lage oder Schicht 11 der Membranschichtstruktur 4 wird anschließend mittels der Schicht 12, die wie oben erläutert aufgebaut ist, geschützt.

Die oben erwähnten Grundmaterialien für die Lage 11 der Membranschicht haben allesamt eine Gasumwandlungstemperatur, die über 150 °C liegt, so dass der einwandfreie Betrieb der Lithiumzelle auch noch bei höheren Temperaturen gewährleistet ist. Die erfindungsgemäß hergestellte Lithiumzelle gestattet somit eine höhere Arbeitstemperatur als die nach dem Stand der Technik aufgebauten Lithiumzellen mit PEO. Die erfindungsgemäßen Akkus können entsprechend sowohl beim Laden als auch beim Entladen mit größeren Strömen belastet werden.

Darüber hinaus zeichnen sich die neuen Lithiumakkus durch einen geringeren Innenwiderstand aus, da die "isolierende" Membran zwischen der Anode und Kathode dünner ist als nach dem Stand der Technik. Die Dicke der Membran hat einen Einfluss auf den Innenwiderstand. Je geringer die Dicke ist, umso kleiner ist auch der Innenwiderstand der Zelle, was wiederum dazu beiträgt, die Verlustwärme beim Laden gering zu halten.

Die Lithiumionen leitende Lage 11 der Membranschicht 4 kann auch erzeugt werden, indem beispielsweise das oben erwähnte Material unter Zusatz von Stoffen, die aus der Gruppe Li₃PO₄, Li₃P oder Siliziumnanopartikel ausgewählt ist unter Hochdruck auf die Schicht 4 aufgesprüht wird. Die gewünschte Polymerisation erfolgt durch Einwirkung eines Hochfrequenzplasmas, auf das aufgesprühte Material. Die eingebetteten Moleküle sorgen später für die gewünschte Kanalbildung, durch die die Lithiumionen hindurch wandern können. Ein Verfahren zum Hochdruck spühen ist z.B. in der DE 10 2008 047 955 beschrieben. Auf diese Vorveröfentlichung wird hier Bezug genommen um unnötige Wiederholungen zu vermeinden.

Eine weitere Möglichkeit, die Ionen leitende Lage 11 der Membranschicht 4 zu erzeugen, besteht darin einen verlinkten Gelelektrolyten einzusetzen, der aus sternförmig oder linear geformten Polyeterketten besteht. Dieser Stoff bildet ein mechanisches Gerüst, das auch bei Temperaturen über 150 °C mechanisch hinreichend fest ist. Die Zwischenräume in dem Gerüst werden durch PEO gefüllt, das von Haus aus Lithiumionen leitend ist. Andererseits verhindert das eingebettete PEO den Durchtritt anderer Atome, so dass eine Membranschicht 4 erzeugt wird, die lediglich Lithiumionen leitend ist, und zwar auch bei Temperaturen oberhalb 150 °C und somit bei einer Temperatur, die oberhalb des Gasumwandlungspunktes von PEO. Das vorhandene Gerüst aus dem Gelelektrolyten verhindert, dass das verflüssigte PEO lokal verschwindet, und dort ein Kurzschluss zwischen der Anode und der Kathode entstehen könnte.

Eine weitere Möglichkeit die gewünschte Lithiumionen leitende Lage 11 zu erzeugen, sieht vor eine Membran zu erzeugen, indem eine Sohl-Gelschicht abgeschieden wird. Diese wird aus den Stoffen Polybenimidazol oder Polyphosphazen in Kombination mit ZrO₂-Partikeln ausgewählt. Dieses Material wird im Spinn- oder im Dip-Coating-Verfahren aufgetragen und anschließend polymerisiert. Die eingebetteten Zirkondioxid-Moleküle sorgen dafür, dass die entsprechende Lithiumionenleitfähigkeit entsteht.

Ein Lithium-Akku enthält eine Anoden- und eine Kathodenstruktur, die voneinander durch eine Membranstruktur getrennt sind. Zu der Membranstruktur gehört eine Lage, die lediglich Lithiumionen leitend ist und die sich durch die Eigenschaft auszeichnet oberhalb von der Temperatur 150 °C mechanisch hinreichend fest zu sein, um einen lokalen Kurzschluss zwischen der Anoden- und der Kathodenstruktur zu verhindern.

## Patentansprüche

1. Lithiumionen-Akku (1)
- mit einer Kathode (3), die ein metallisch leitendes Substrat (5) und eine auf dem Substrat (5) befindliche polykristalline Schicht (6) aufweist,
- mit einer Ionen leitenden Membranstruktur (4), die wenigstens eine Lithium leitende Schicht (11) aufweist,
- mit einer Anode (2), die sich aus einer polykristallinen Schicht (7) und einer metallisch leitenden Schicht (8) zusammensetzt, wobei die polykristalline Schicht (7) der Membranstruktur (4) zugekehrt ist,
**dadurch gekennzeichnet, dass** die Lithium leitende Schicht (11) eine Polymerfolie ist, die ein Polymer mit einer Glasumwandlungstemperatur über 150 °C aufweist und aufgrund physikalischer Behandlung Lithiumionen leitend ist.

2. Lithiumionen-Akku nach Anspruch 1,
**dadurch gekennzeichnet, dass** die Polymerfolie, die derart physikalisch behandelt ist, dass durch einen Beschuss mit Lithiumionen oder Lithiumatomen in der Lithium leitenden Schicht (11) Kanäle und/oder Lithiumionen oder Lithiumatome eingebracht sind.

3. Lithiumionen-Akku nach Anspruch 2,
**dadurch gekennzeichnet, dass** der Abstand zwischen einem eingeschossenen Lithiumatom und der an die Lithium leitende Schicht (11) angrenzenden Anode (2), Kathode (3) oder weiteren Schicht nicht größer als 20 nm ist.

4. Lithiumionen-Akku nach Anspruch 1, 2 oder 3,
**dadurch gekennzeichnet, dass** die Lithium leitende Schicht (11) eine Stärke von 2 bis 19 µm, insbesondere von 2 bis 5 µm aufweist.

5. Lithiumionen-Akku nach einem der Ansprüche 1 bis 4,
**dadurch gekennzeichnet, dass** die Ionen leitenden Membranstruktur (4), eine zweite Schicht (12) aufweist, die porös ist.

6. Lithiumionen-Akku nach Anspruch 5,
**dadurch gekennzeichnet, dass** die Lithium leitende Schicht (11) dünner als die zweite Schicht (12) ist.

7. Lithiumionen-Akku nach einem der Ansprüche 5 oder 6,
**dadurch gekennzeichnet, dass** die zweite Schicht eine Stärke zwischen 10 und 20 µm aufweist.

8. Lithiumionen-Akku nach einem der Ansprüche 1 bis 7,
**dadurch gekennzeichnet, dass** das metallisch leitende Substrat (5) eine Nickel- oder eine Edelstahlschicht ist.

9. Lithiumionen-Akku nach einem der Ansprüche 1 bis 8,
**dadurch gekennzeichnet, dass** wenigstens eine der polykristallinen Schichten (6, 7) eine nanokristalline Schicht ist.

10. Lithiumionen-Akku nach einem der Ansprüche 1 bis 9,
**dadurch gekennzeichnet, dass** die polykristalline Schicht (6) der Kathode (3) aus den Stoffen MnO₂, CoO₂ oder NiMn ausgewählt ist.

11. Lithiumionen-Akku nach einem der Ansprüche 1 bis 10,
**dadurch gekennzeichnet, dass** die Ionen leitenden Membranstruktur (4) aus der Gruppe der Stoffe Polyetherketon, Polysulfon, Polyimid, Polyethersulfon, Polybenzimidazol oder Polyphosphazenpolymer ausgewählt ist.

12. Lithiumionen-Akku nach einem der Ansprüche 1 bis 11,
**dadurch gekennzeichnet, dass** die polykristalline Schicht (7) der Anode (2) aus den Stoffen C, Si, LiAl, LiC oder LiNi ausgewählt ist.

13. Lithiumionen-Akku nach einem der Ansprüche 1 bis 12,
**dadurch gekennzeichnet, dass** die Ionen leitende Membranstruktur (4) Polyethylenoxid aufweist.

14. Lithiumionen-Akku nach einem der Ansprüche 1 bis 13,
**dadurch gekennzeichnet, dass** die Lithium leitende Schicht (11) kovalent verlinkte Gel-Elektrolyten enthält, die aus sternförmig oder linear geformten Polymerketten bestehen, in denen Lithiumionen leitendes Material eingebettet ist.

15. Verfahren zur Herstellung eines Lithiumionen-Akku (1)
- mit einer Kathode (3), die ein metallisch leitendes Substrat (5) und eine auf dem Substrat (5) befindliche polykristalline Schicht (6) aufweist,
- mit einer Ionen leitenden Membranstruktur (4), die wenigstens eine Lithium leitende Schicht (11) aufweist,
- mit einer Anode (2), die sich aus einer polykristallinen Schicht (7) und einer metallisch leitenden Schicht (8) zusammensetzt, wobei die polykristalline Schicht (7) der Membranstruktur (4) zugekehrt ist,
**dadurch gekennzeichnet, dass** die Lithium leitende Schicht (11) als Polymerfolie, die ein Polymer mit einer Glasumwandlungstemperatur über 150 °C aufweist ,auf eine zweite Schicht (12) der Membranstruktur (4) aufgebracht und anschließend derart physikalisch behandelt wird, dass die Polymerfolie Lithiumionen leitend wird.

16. Verfahren nach Anspruch 15,
**dadurch gekennzeichnet, dass** die Polymerfolie mit Lithiumionen und Lithiumatomen beschossen wird.

17. Verfahren nach Anspruch 15 oder 16,
**dadurch gekennzeichnet, dass** die Lithium leitende Schicht (11) als dünne, gasdichte Polymerfolie auf die zweite Schicht (12) der Membranstruktur (4) abgeschieden wird.

18. Verfahren nach Anspruch 17,
dass die Lithium leitende Schicht (11) mittels Dip- oder Spin-Coating auf die zweite Schicht (12) der Membranstruktur (4) abgeschieden wird.

19. Verfahren nach Anspruch 15,
**dadurch gekennzeichnet, dass** die Lithium leitende Schicht (11) auf die zweite Schicht (12) der Membranstruktur (4) mittels Hochdruckverdüsung aufgesprüht wird.

20. Verfahren nach Anspruch 19,
**dadurch gekennzeichnet, dass** die Lithium leitende Schicht (11) auf die zweite Schicht (12) der Membranstruktur (4) unter Zusatz von aus der Gruppe Li₃Po₄, Li₃P, und Siliziumpartikeln ausgewählten Stoffen aufgesprüht wird.

21. Verfahren nach einem der Ansprüche 15 bis 20,
**dadurch gekennzeichnet, dass** die Lithium leitende Schicht (11) auf die Anode (2) oder die Kathode aufgebracht wird.

22. Verfahren nach einem der Ansprüche 15 bis 21,
**dadurch gekennzeichnet, dass** die Lithium leitende Schicht (11) auf die zweite Schicht (12) der Membranstruktur (4) als Sol-Gel-Schicht abgeschieden wird, die Polybenzimidazol oder Polyphosphazen in Kombination mit ZrO₂-Partikeln aufweist.

## Claims

1. A lithium ion accumulator (1)
- having a cathode (3) comprising a metallically conducting substrate (5) and a polycrystalline layer (6) situated upon the substrate (5),
- having an ion-conducting membrane structure (4) comprising at least one lithium-conducting layer (11),
- having an anode (2) consisting of a polycrystalline layer (7) and a metallically conducting layer (8), wherein the polycrystalline layer (7) faces the membrane structure (4),
**characterized in that** the lithium-conducting layer (11) is a polymer film comprising a polymer having a glass transition temperature of more than 150°C and is lithium ion-conducting as a result of a physical treatment.

2. The lithium ion accumulator according to claim 1,
**characterized in that** the polymer film which is physically treated such that channels and/or lithium ions or lithium atoms are introduced in the lithium-conducting layer (11) by a bombardment with lithium ions or lithium atoms.

3. The lithium ion accumulator according to claim 2,
**characterized in that** the distance between an injected lithium ion and the anode (2), cathode (3) or other layer adjoining the lithium-conducting layer (11) is not greater than 20 nm.

4. The lithium ion accumulator according to claim 1, 2 or 3,
**characterized in that** the lithium-conducting layer (11) has a thickness of from 2 to 19 µm, prefreably from 2 to 5 µm.

5. The lithium ion accumulator according to any one of claims 1 to 4,
**characterized in that** the ion-conducting membrane structure (4) comprises a second layer (12) which is porous.

6. The lithium ion accumulator according to claim 5,
**characterized in that** the lithium-conducting layer (11) is thinner than the second layer (12).

7. The lithium ion accumulator according to any one of claims 5 or 6,
**characterized in that** the second layer has a thickness of between 10 and 20 µm.

8. The lithium ion accumulator according to any one of claims 1 to 7,
**characterized in that** the metallically conducting substrate (5) is a nickel or stainless steel layer.

9. The lithium ion accumulator according to any one of claims 1 to 8,
**characterized in that** at least one of the polycrystalline layers (6, 7) is a nanocrystalline layer.

10. The lithium ion accumulator according to any one of claims 1 to 9,
**characterized in that** the polycrystalline layer (6) of the cathode (3) is selected from among the substances of MnO₂, CoO₂ or NiMn.

11. The lithium ion accumulator according to any one of claims 1 to 10,
**characterized in that** the ion-conducting membrane structure (4) is selected from among the group of substances of polyetherketone, polysulfone, polyimide, polyethersulfone, polybenzimidazole or polyphosphazene polymer.

12. The lithium ion accumulator according to any one of claims 1 to 11,
**characterized in that** the polycrystalline layer (7) of the anode (2) is selected from among the substances of C, Si, LiAl, LiC or LiNi.

13. The lithium ion accumulator according to any one of claims 1 to 12,
**characterized in that** the ion-conducting membrane structure (4) comprises polyethylene oxide.

14. The lithium ion accumulator according to any one of claims 1 to 13,
**characterized in that** the ion-conducting membrane structure (11) contains covalent-bonding gel electrolytes consisting of star-shaped or linear polymer chains in which lithium ion-conducting material is embedded.

15. A method for producing a lithium ion accumulator (1)
- having a cathode (3) comprising a metallically conducting substrate (5) and a polycrystalline layer (6) situated on the substrate (5),
- having an ion-conducting membrane structure (4) comprising at least one lithium-conducting layer (11),
- having an anode (2) consisting of a polycrystalline layer (7) and a metallically conducting layer (8), wherein the polycrystalline layer (7) faces the membrane structure (4),
**characterized in that** the lithium-conducting layer (11) is applied as a polymer film, comprising a polymer having a glass transition temperature of more than 150°C, to a second layer (12) of the membrane structure (4) and is subsequently physically treated such that the polymer film becomes lithium ion-conducting.

16. The method according to claim 15,
**characterized in that** the polymer film is bombarded with lithium ions and lithium atoms.

17. The method according to claim 15 or 16,
**characterized in that** the lithium-conducting layer (11) is deposited as a thin, gas-tight polymer film on the second layer (12) of the membrane structure (4).

18. The method according to claim 17,
**characterized in that** the lithium-conducting layer (11) is deposited on the second layer (12) of the membrane structure (4) by means of dip or spin coating.

19. The method according to claim 15,
**characterized in that** the lithium-conducting layer (11) is sprayed onto the second layer (12) of the membrane structure (4) by means of high pressure atomization.

20. The method according to claim 19,
**characterized in that** the lithium-conducting layer (11) is sprayed onto the second layer (12) of the membrane structure (4) with addition of substances selected from among the group of Li₃Po₄, Li₃P and silicone particles.

21. The method according to any one of claims 15 to 20,
**characterized in that** the lithium-conducting layer (11) is applied to the anode (2) or the cathode.

22. The method according to any one of claims 15 to 21,
**characterized in that** the lithium-conducting layer (11) is applied to the second layer (12) of the membrane structure (4) as a sol-gel layer comprising polybenzimidazole or polyphosphazene combined with ZrO₂ particles.

## Revendications

1. Accumulateur aux ions de lithium (1)
- comprenant une cathode (3) qui présente un substrat à conduction métallique (5) et une couche polycristalline (6) se trouvant sur le substrat (5),
- comprenant une structure de membrane à conduction ionique (4) qui présente au moins une couche conductrice de lithium (11),
- comprenant une anode (2) qui se compose d'une couche polycristalline (7) et d'une couche à conduction métallique (8), la couche polycristalline (7) étant tournée vers la structure de membrane (4),
**caractérisé en ce que** la couche conductrice de lithium (11) est un film polymère qui présente un polymère ayant une température de transition vitreuse supérieure à 150 °C et qui est conducteur d'ions de lithium en raison d'un traitement physique.

2. Accumulateur aux ions de lithium selon la revendication 1,
**caractérisé en ce que** le film polymère est traité physiquement de telle façon que des canaux et/ou des ions de lithium ou des atomes de lithium sont inscrits dans la couche conductrice de lithium (11) par un bombardement aux ions de lithium ou aux atomes lithium.

3. Accumulateur aux ions de lithium selon la revendication 2,
**caractérisé en ce que** la distance entre un atome de lithium projeté et l'anode (2), la cathode (3) ou autre couche limitrophe de la couche conductrice de lithium (11) n'est pas supérieure à 20 nm.

4. Accumulateur aux ions de lithium selon la revendication 1, 2 ou 3,
**caractérisé en ce que** la couche conductrice de lithium (11) présente une épaisseur de 2 à 19 µm, par exemple de 2 à 5 µm.

5. Accumulateur aux ions de lithium selon l'une des revendications 1 à 4,
**caractérisé en ce que** la structure de membrane à conduction ionique (4) présente une deuxième couche (12) qui est poreuse.

6. Accumulateur aux ions de lithium selon la revendication 5,
**caractérisé en ce que** la couche conductrice de lithium (11) est plus mince que la deuxième couche (12).

7. Accumulateur aux ions de lithium selon l'une des revendications 5 ou 6,
**caractérisé en ce que** la deuxième couche présente une épaisseur entre 10 et 20 µm.

8. Accumulateur aux ions de lithium selon l'une des revendications 1 à 7,
**caractérisé en ce que** le substrat à conduction métallique (5) est une couche de nickel ou d'inox.

9. Accumulateur aux ions de lithium selon l'une des revendications 1 à 8,
**caractérisé en ce qu'**au moins une des couches polycristallines (6, 7) est une couche nanocristalline.

10. Accumulateur aux ions de lithium selon l'une des revendications 1 à 9,
**caractérisé en ce que** la couche polycristalline (6) de la cathode (3) est sélectionnée parmi les matières MnO₂, CoO₂ ou NiMn.

11. Accumulateur aux ions de lithium selon l'une des revendications 1 à 10,
**caractérisé en ce que** la structure de membrane à conduction ionique (4) est sélectionnée dans le groupe des matières polyéthercétone, polysulfone, polyimide, polyéthersulfone, polybenzimidazole ou polyphosphazen polymère.

12. Accumulateur aux ions de lithium selon l'une des revendications 1 à 11,
**caractérisé en ce que** la couche polycristalline (7) de l'anode (2) est sélectionnée parmi les matières C, Si, LiAl, LiC ou LiNi.

13. Accumulateur aux ions de lithium selon l'une des revendications 1 à 12,
**caractérisé en ce que** la structure de membrane à conduction ionique (4) présente du polyéthylènoxyde.

14. Accumulateur aux ions de lithium selon l'une des revendications 1 à 13,
**caractérisé en ce que** la couche conductrice de lithium (11) contient des électrolytes de gel à liaison covalente qui sont composés de chaînes de polymère en forme d'étoile ou en forme linéaire dans lesquelles est logé du matériau conducteur d'ions de lithium.

15. Procédé de fabrication d'un accumulateur aux ions de lithium (1)
- comprenant une cathode (3) qui présente un substrat à conduction métallique (5) et une couche polycristalline (6) se trouvant sur le substrat (5),
- comprenant une structure de membrane à conduction ionique (4) qui présente au moins une couche à conduction de lithium (11),
- comprenant une anode (2) qui se compose d'une couche polycristalline (7) et d'une couche à conduction métallique (8), la couche polycristalline (7) étant tournée vers la structure de membrane (4),
**caractérisé en ce que** la couche conductrice de lithium (11) est apposée comme film polymère présentant un polymère ayant une température de transition vitreuse supérieure à 150 °C sur une deuxième couche (12) de la structure de membrane (4) et qui est ensuite traitée physiquement de telle manière que le film polymère soit conducteur d'ions de lithium.

16. Procédé selon la revendication 15,
**caractérisé en ce que** le film polymère est bombardé d'ions de lithium et d'atomes de lithium.

17. Procédé selon la revendication 15 ou 16,
**caractérisé en ce que** la couche conductrice de lithium (11) est déposée comme mince film polymère étanche au gaz sur la deuxième couche (12) de la structure de membrane (4).

18. Procédé selon la revendication 17,
**caractérisé en ce que** la couche conductrice de lithium (11) est déposée sur la deuxième couche (12) de la structure de membrane (4) par dépôt par trempage *(dip-coating)* ou par dépôt à la tournette *(spin-coating).*

19. Procédé selon la revendication 15,
**caractérisé en ce que** la couche conductrice de lithium (11) est pulvérisée sur la deuxième couche (12) de la structure de membrane (4) par pulvérisation haute pression.

20. Procédé selon la revendication 19,
**caractérisé en ce que** la couche conductrice de lithium (11) est pulvérisée sur la deuxième couche (12) de la structure de membrane (4) par ajout de matières sélectionnées dans le groupe Li₃Po₄, Li₃P, et particules de silicium.

21. Procédé selon l'une des revendications 15 à 20,
**caractérisé en ce que** la couche conductrice de lithium (11) est apposée sur l'anode (2) ou sur la cathode.

22. Procédé selon l'une des revendications 15 à 21,
**caractérisé en ce que** la couche conductrice de lithium (11) est déposée sur la deuxième couche (12) de la structure de membrane (4) comme couche sol-gel qui présente du polybenzimidazole ou du polyphosphazène en combinaison avec des particules de ZrO₂.
